# EUROPEAN PATENT APPLICATION

(11) **EP 1 484 737 A1**
(43) Date of publication of application: **08.12.2004**
(21) Application number: 03253549.4
(22) Date of filing: 05.06.2003
(51) Int. Cl.: G09G 3/20, G09G 3/36

(54) **Display controller**

(71) Applicant: ARM Limited, Cherry Hinton, Cambridge CB1 9NJ (GB)
(72) Inventor: Stevens, Ashley Miles, Cambridge CB5 9AE (GB)
(74) Representative: Horner, David Richard

(57) **Abstract**

The present invention relates to a display controller. In low power devices, the power consumed in driving a display can limit the operating life of battery powered devices. A display controller (10') for controlling a display (40) having a plurality of pixels forming a frame is disclosed. The display controller comprises display data supply means (50') operable to supply sequential frames of display data to a display. The display controller also comprises a supply controller (60', 70') operable to control the supply of each frame of display data from the display data supply means for displaying on the display, the supply controller being operable to prevent intermittently the supply of a frame of display data to the display for a predetermined period. By providing a supply controller which can prevent for a predetermined period the supply of a frame of display data to the display, the average amount of power consumed in driving the display is reduced.

## Description

### Field of the Invention

The present invention relates to a display controller.

### Background to the invention

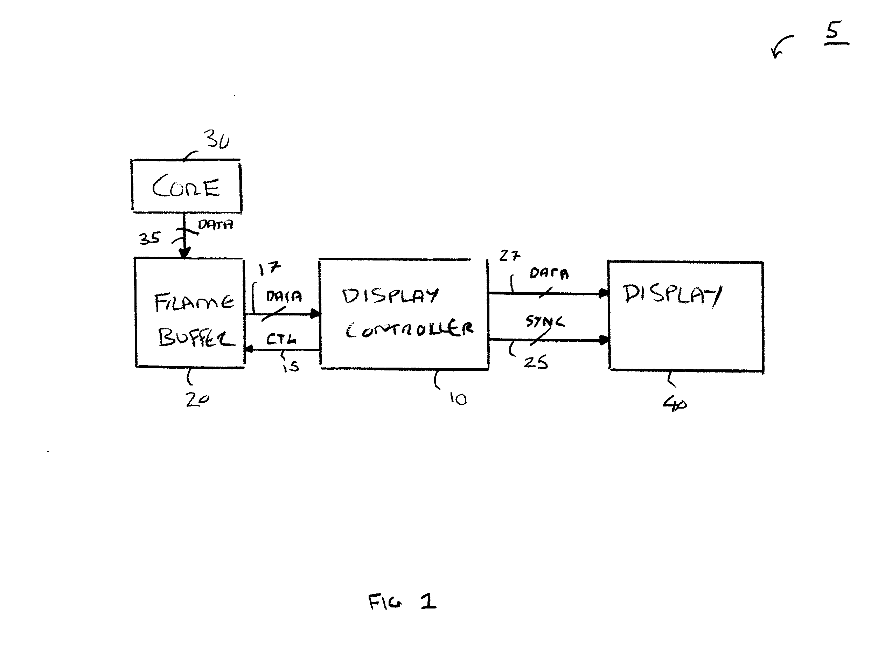

Display controllers are known. One such display controller 10 is shown in the display system, generally 5, illustrated by figure 1. A display 40 displays display data which is stored by a core 30 in a frame buffer 20. The display data may comprise, for example, a picture or a frame of video data.

The display controller 10 controls the supply of display data stored in the frame buffer 20 to the display 40. The display controller 10 accesses the display data from the frame buffer 20 and provides this display data to the display 40 in a predetermined format which includes any necessary timing or synchronisation signals. Accordingly, the display controller 10 receives display data from the frame buffer 20 over the bus 17 in response to control signals issued over the path 15. The display data is then provided to the display 40 over the bus 27 and includes the synchronisation signals provided over the bus 25.

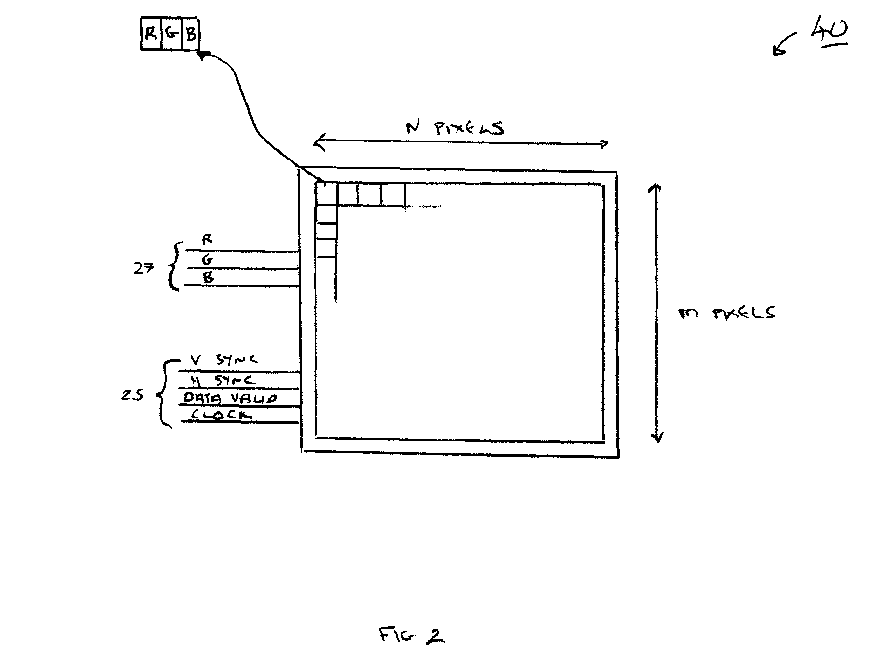

Figure 2 illustrates in more detail an example arrangement of the display 40. The display 40 comprises a number of pixels. In this example, the display has 'N' pixels in the horizontal direction and 'M' pixels in the vertical direction. Each pixel comprises a red, green and blue component.

The display 40 receives the display data as colour component signals or data, in this case separate red, green and blue colour component data, over the data bus 27. The display also receives vertical synchronisation, horizontal synchronisation, data valid and clock signals or data over the timing and synchronisation bus 25 which controls the display of the display data on the display 40.

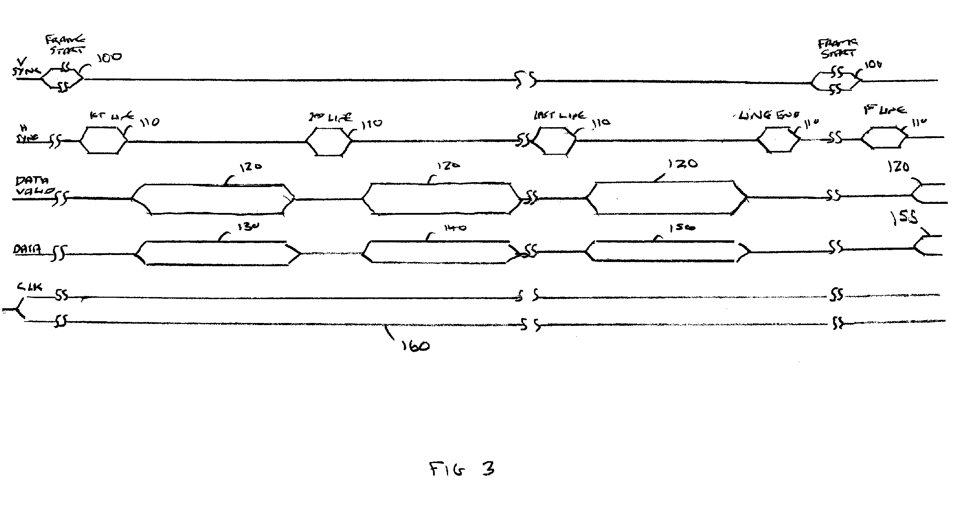

The operation of the display controller 10 will now be described with reference to figure 3. To display a frame of data the display controller 10 issues a vertical synchronisation signal 100 over the timing and synchronisation bus 25 to the display 40 which indicates to the display 40 that a new frame of data is about to be sent. Thereafter, a horizontal synchronisation signal 110 is issued over the timing and synchronisation bus 25 which indicates to the display 40 that the first line of data is about to be received over the data bus 27. The display controller 10 issues a control signal over path 15 to the frame buffer 20 to request the first line of display data. The first line of display data is accessed from the frame buffer 20 over the data bus 17 and passed to the display 40 over the data bus 27. It will be appreciated that typically the whole line need not be retrieved prior to being provided to the display 40, but just that the display data needs retrieving only slightly in advance of it being provided to the display 40. Once the display data is available to the display 40 the display controller 10 provides a data valid signal 120 over the timing and synchronisation bus 25. On receipt of the data valid signal the display 40 reads the display data 130 from the data bus 27. A clock signal 160 is provided which provides timing information to the frame buffer 20, the display controller 10 and the display 40. The use of such clock signals is well known and it will be appreciated that typically, events such as the issue of the vertical synchronisation signals 100, horizontal synchronisation signals 110, data valid signals 120 and the data itself are timed to coincide with the rising or falling edges of the clock signal 160.

As mentioned above, in this example, the display data comprises separate red, green and blue colour component data. Each of the colour component data comprises a number of data values, each value generally corresponding to a particular pixel in the display 40. Hence, for a display having a line comprising 'N' pixels, at least 'N' data values are provided for each colour component data for that line.

Once the first line of display data has been transferred to the display 40 the display controller 10 provides a horizontal synchronisation signal 110 to the display 40 to indicate the end of that line and that the next line of display data is about to be provided. The display controller 10 sends a control signal over the path 15 to the frame buffer 20 to access the next line of display data. The display controller 10 receives the next line of display data from the frame buffer 20 over the bus 17, provides this next line of data 140 over the data bus 27 to the display 40 and provides a data valid signal 120 to the display 40. The display 40 on receipt of the data valid signal 120 then displays the next line of display data at each of the corresponding pixels of that line.

This process continues until the last line of data in the frame has been provided to the display 40 whereupon the display controller 10 typically provides a further horizontal synchronisation signal 110 to the display 40 to indicate the end of the last line and, hence, that all data for that frame has now been supplied.

The process is then repeated for the next frame of data stored in the frame buffer 20, and so on.

The duration of the vertical synchronisation signal 100 is significantly longer than the horizontal synchronisation signal 110. The duration of the horizontal synchronisation signal 110 represents the period of time in a conventional cathode ray tube display for the scanning beam to be deflected horizontally back to the beginning of a line, this often being referred to as an inter-frame period. The duration of the vertical synchronisation signal 100 represents the period of time in a conventional cathode ray tube display for the scanning beam to be deflected horizontally back to the beginning of the line and vertically back to the beginning of the frame.

It will be appreciated that the frame buffer 20, the display controller 10 and the display 40 all consume power in order to display each frame of display data. Additionally, power is consumed when propagating display data including control, timing and synchronisation signals between the display controller 10, frame buffer 20 and display 40. The amount of power consumed can be relatively high since, typically, the display controller 10 is arranged to supply frames of display data to the display 40 at a rate such that the display 40 is updated at a refresh rate of around 60 or 70 hertz.

In low power devices, the power consumed in driving the display 40 can limit the operating life of battery powered devices.

Accordingly, it is desired to provide a more power efficient technique for driving a display.

### Summary of the Invention

According to a first aspect of the present invention there is provided a display controller for controlling a display having a plurality of pixels forming a frame, the display controller comprising: display data supply means operable to supply sequential frames of display data to the display; and a supply controller operable to control the supply of each frame of display data from the display data supply means for displaying on the display, the supply controller being operable to prevent intermittently the supply of a frame of display data to the display for a predetermined period.

By providing a supply controller which can prevent for a predetermined period the supply of a frame of display data to the display, the average amount of power consumed in driving the display is reduced. This power reduction occurs because unlike in the prior art approaches where signals and display data are constantly being supplied to the display, these signals are interrupted for a predetermined period. Hence, during this predetermined period, no power is consumed by the display data supply means in response to requests to supply display data, or by the supply controller in supplying the display data to the display. Also, whilst the operation of the display data supply means and the supply controller is suspended, no power is consumed in propagating data to the display. Similarly, because no display data is being provided to the display during the predetermined period, the operation of the display itself is interrupted and hence no power is consumed by the display during this period.

More particularly, because display refresh is not occurring for a period of time (i.e. it is stopped) memory accesses to the display data supply means (for example, a frame buffer) are also stopped for that period of time. Accordingly, the frequency of memory accesses is reduced. This reduces power consumption, the benefit of which is significant. Also, reducing the frequency of memory accesses can also increase system performance. For example, in a so-called "Unified Memory Architecture" (UMA) approach, the display data supply means (such as a frame buffer memory) may be shared by many other devices (e.g. the CPU) and/or used as storage for other processes or activities. Thus, the memory bandwidth required to support the display controller is reduced, saving memory access power, and freeing memory for other devices.

It has also been found that significant power reduction is possible where, for example, display data stored in a frame buffer accessed by the display data supply means changes infrequently from one frame to another such as would occur on the display of a mobile telephone or a personal digital assistant where the image displayed remains relatively static.

Preferably, each pixel has a pixel persistence of time 't', the display data supply means is operable to supply display data for each pixel in the frame and the supply controller is operable to prevent intermittently the supply of a subsequent frame of display data to the display for the predetermined period which is up to time 't'.

By limiting the predetermined period to be less than the pixel persistence time or visual persistence time of each pixel, the visual impact of the delay of the supply of frames of display data is reduced. It will be appreciated that each pixel may exhibit persistence due to any of a number of different mechanisms controlling the illumination of those pixels. It will also be appreciated that the persistence time may be the amount of time which the pixel remains at a predetermined intensity (or a predetermined percentage thereof) after receiving an activating charge or signal and that this persistence time can be estimated based on the recommended minimum refresh rate of the display.

Preferably, the supply controller is operable to prevent intermittently the supply of the subsequent frame of display data to the display for the predetermined period after the supply of a current frame of data to the display.

By preventing the supply of display data between frames any visual effects or artefacts caused by delaying the subsequent frame of display data for the predetermined period can be reduced.

Preferably, the time taken by the display to display the supplied frame of display data is a time 'q', where time 'q' is less than time 't'.

Hence, the supply controller can provide each frame of display data to the display at its normal rate which takes time 'q' and a delay of time (also referred to herein as the predetermined period 'p') is then introduced between frames, and this delay of time 'p' may be longer than the time 'q' taken to display the frame of display data on the display.

It will be appreciated that in order to improve power efficiency, the rate of providing each frame of data to the display could have been reduced instead. However, it has been found that this results in an undesirable visual effect whereby the updating of the frame on the display can be observed. Accordingly, preferred embodiments enable the frame of display data to be updated at its normal refresh rate, which is not generally observable, and any delay is introduced in the inter-frame period.

Preferably, the predetermined period is up to time 't' minus time 'q'.

It will be appreciated that in situations where the frames of display data supplied by the display data supply means are regularly updated such as, for example, where the display data comprises frames of video data or where the display data comprises a graphical user interface which is being interacted with by a user, then introducing a delay can also result in an undesirable visual effect whereby latency occurs between the frames of display data being updated and these frames of display data being displayed on the display.

Accordingly, in preferred embodiments, the supply controller is operable to resume the supply of the subsequent frame of display data to the display during the predetermined period in response to the receipt of an indication that the subsequent frame of display data differs from the current frame of display data.

Hence, the duration of any delay between frames of data to be displayed can be reduced in order to minimise any latency and any adverse visual effects in the situation where the subsequent frame of data differs from the frame that is currently being displayed.

Preferably, the supply controller is operable to generate timing signals to control the supply of the sequential frames of display data to the display, the supply controller being operable to prevent the generation of the timing signals for the predetermined period to prevent the supply of the subsequent frame of display data to the display.

Hence, for displays whose operation is controlled by timing signals, the supply controller can prevent the generation of these timing signals which prevents the supply of the subsequent frame to the display which in turn prevents the display from being updated.

Preferably, the timing signals comprise vertical synchronisation and horizontal synchronisation signals, the supply controller being operable to prevent the generation of the vertical synchronisation and horizontal synchronisation signals for the predetermined period to prevent the supply of the subsequent frame of display data to the display.

Hence, for displays which utilise vertical and horizontal synchronisation signals, the supply controller can prevent the display being updated by not generating the synchronisation signals during the predetermined period, and hence prevent the supply of the subsequent frame of display data.

Preferably, the supply controller comprises a programmable prevention register operable to store an indication of the predetermined period.

Providing a programmable register in which to store an indication of the predetermined period provides an efficient means by which the duration of the predetermined period may be set and adjusted.

Alternatively, the supply controller is responsive to a signal indicative of the predetermined period.

Preferably, the display comprises thin film transistor active matrix control.

Any displays utilising a thin film transistor active matrix control technique have been found to be particularly suited to this technique. The typical persistence time of each pixel in such a display is many times longer than the typical frame refresh rates at which such displays are generally operated. Hence, power consumption when operating such a display can be significantly reduced, whilst maintaining desirable visual characteristics of display, by refreshing the display at its normal rate but by intermittently preventing the supply of a frame of display data to the display for a predetermined period.

In preferred embodiments, the display is a thin film transistor liquid crystal display.

According to a second aspect of the present invention there is provided a method of controlling the supply of sequential frames of display data to a display, the display having a plurality of pixels forming a frame, the method comprising the steps of: a) supplying each frame of display data for displaying on the display; and b) preventing intermittently the supply of a frame of display data to the display for a predetermined period.

According to a third aspect of the present invention there is provided a computer program product operable to perform the second aspect of the present invention when said product is run on a computer.

### Brief Description of the Drawings

Embodiments of the present invention will now be described by way of example with reference to the accompanied drawings in which:
Figure 1 illustrates a display system;
Figure 2 illustrates the arrangement of a typical display;
Figure 3 is a timing diagram illustrating the operation of the display system of figure 1;
Figure 4 illustrates a display system incorporating a display controller according to an embodiment of the present invention; and
Figures 5 and 6 are timing diagrams illustrating the operation of the display system of figure 4.

### Description of Preferred Embodiments

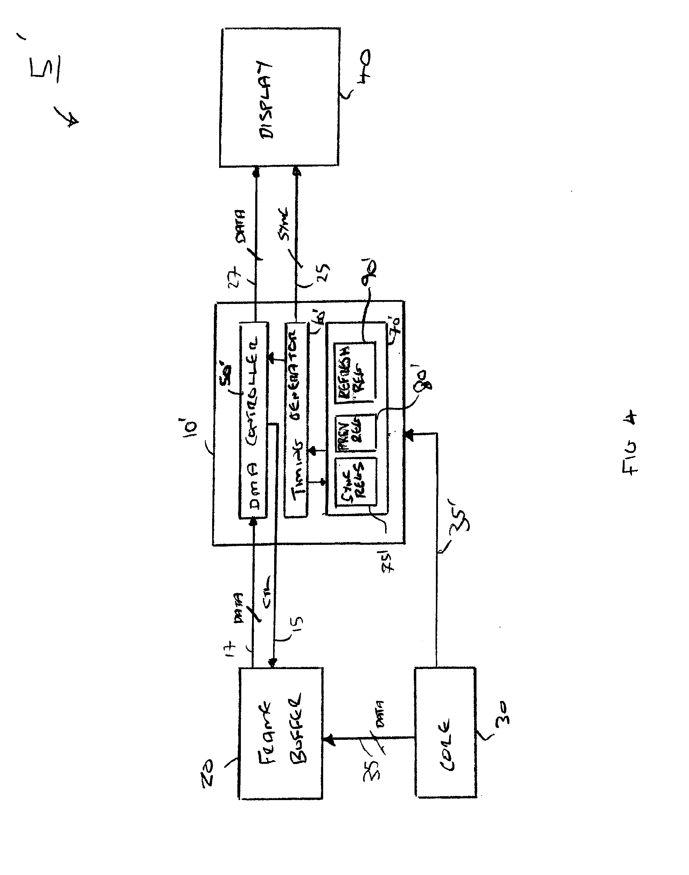

Figure 4 illustrates a display system, generally 5', incorporating a display controller 10' according to a preferred embodiment of the present invention. The display controller 10' is coupled to a frame buffer 20 and a display 40. The display controller 10' is preferably coupled to the core 30 by way of a data path 35'. The display controller 10' receives and transmits display data over the buses 17, 27 and sends control and synchronisation signals over the paths 15, 25 in a similar fashion to that described with reference to figure 1 above. However, the display controller 10' is also operable to reduce the average amount of power consumed in driving the display by introducing preferably an inter-frame delay period during which no signals are provided to the display 40. Whilst the supply of display data is preferably interrupted during an inter-frame period in order to minimise any visual effects, it will be appreciated that the interruption could occur at any other convenient time such as, for example, during the transmission of lines comprising the so-called 'blanking period' of a frame of video data (the period when non-display data such as teletext or the like is transmitted) or during assertion of the horizontal synchronisation signal.

The display controller 10' comprises a direct memory access (DMA) controller 50' operable to access display data from the frame buffer 20. The display controller 10' also comprises a timing generator 60' operable to provide signals to control the DMA controller 50' and to provide timing and synchronisation signals to the display 40 over the path 25. The display controller 10' also comprises a register bank 70' which comprises synchronisation registers 75', a prevention register 80' and a refresh register 90'.

The synchronisation registers 75' store timing and synchronisation information which is used by the timing generator 60' to determine the timing of the display data sent over bus 27, and the generation of the timing and synchronisation signals sent over bus 25. For example, the synchronisation registers 75' provide information regarding the construction and duration of the vertical synchronisation signal 100, the horizontal synchronisation signal 110 and their relationship with respect to the data valid 120 and display data signals 130, 140, 150, 155. Clock signal 160 is provided which provides timing information to the frame buffer 20, the display controller 10 and the display 40. The timing generator 60' utilises the clock signal when generating, for example, the vertical synchronisation signals 100, horizontal synchronisation signals 110 and data valid signals 120.

The prevention register 80' stores an indication of the duration of the period of time 'p' for which the generation of the timing and synchronisation signals are prevented from being generated. Whilst preventing the generation of the timing and synchronisation signals, no display data is retrieved from the frame buffer 20, no display data is supplied to the display 40 and the display 40 is not updated. The indication stored in this register may be set by the core 30 to suit a particular display based, for example, on the persistence of pixels of the display as derivable from the minimum refresh rate (Rmin) recommended for the display 40. It will be appreciated that the persistence time of the pixels can be estimated to be 1/Rmin. Additionally, or alternatively, the indication stored in the register may be set or varied dynamically based on the characteristics of the display data to be displayed, for example, based on the rate of change of data stored in the frame buffer 20.

The refresh register 90' stores an indication of whether data stored in the frame buffer 20 differs to that currently being displayed on the display 40. This determination is generally made by the core 30 which will set the refresh register 90' when the data stored in the frame buffer 20 differs to that being displayed on the display 40. As will be explained in more detail below, the timing generator 60' will also refer to the refresh register 90' in order to determine whether, during the predetermined period, to resume the generation of the timing signals in order to update the display 40.

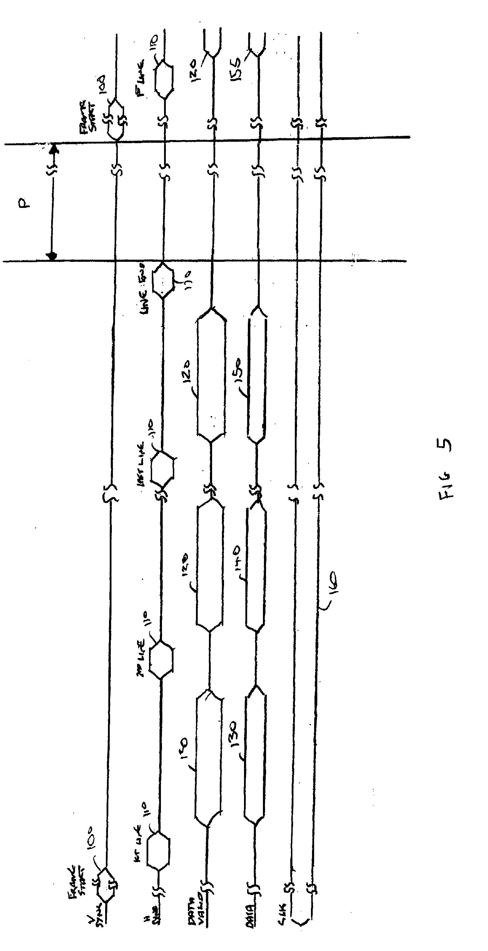

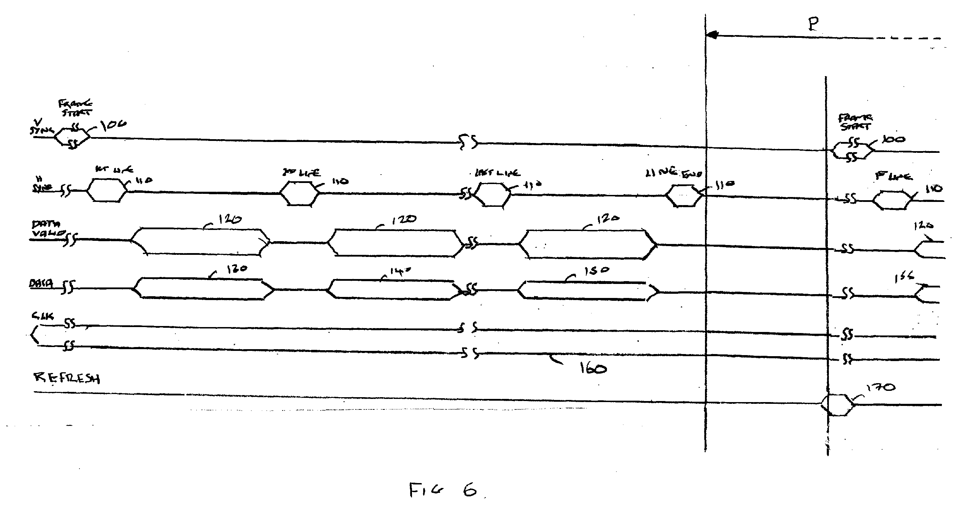

The operation of the display controller 10' will now be explained in more detail with reference to the timing diagram of figures 5 and 6. The core 30 stores a frame of display data in the frame buffer 20 over the data bus 35 for subsequent display on the display 40. The display data stored in the frame buffer 20 is periodically updated by the core 30.

The display controller 10' operates to access the display data stored in the frame buffer 20 and to provide that display data including any necessary timing and synchronisation signals to the display 40 for its display thereon.

In order to display a frame of data on the display 40 the DMA controller 50', in response to a signal received from the timing generator 60', sends a data request signal to the frame buffer 20 over the control path 15. Typically, display data corresponding to the first line of the frame is provided to the DMA controller 50' over the data bus 17. Concurrently with the request for display data the timing generator 60' generates the vertical synchronisation signal 100, the characteristics of which are determined by reference to particular values programmed by the core 30 into the synchronisation registers 75', which is transmitted over the timing and synchronisation bus 25. Thereafter, again at a timing determined by values stored in the synchronisation registers 75', the timing generator 60' provides a horizontal synchronisation signal 110 over the timing and synchronisation bus 25 to the display 40. The horizontal synchronisation signal 110 is again constructed with reference to particular values stored in the synchronisation registers 75' programmed by the core 30. Typically, the timing of these synchronisation signals are arranged to conform, for compatibility reasons, to those used by conventional cathode ray tube displays which have been developed to display primarily moving images and whose pixels have a relatively short visual persistence time. It will be appreciated that the duration of the horizontal synchronisation signal 110 will be significantly shorter than that of the vertical synchronisation signal 100. The receipt of the vertical synchronisation signal 100 by the display 40 will indicate to the display 40 a beginning of a frame of display data. Thereafter, the receipt of horizontal synchronisation signals 110 indicates to the display 40 the beginning of sequential lines of display data which together form the frame.

Following the issue of the horizontal synchronisation signal 100 the DMA controller 50' provides the first line of frame data to the display 40 over the data bus 27. After a set up time, again determined by values stored in the synchronisation registers 75', the timing generator 60' provides a data valid signal 120 over the timing and synchronisation bus 25 to the display 40 to indicate that the first line of display data 130 is now available. The display 40 then reads the first line of display data 130 which is then scanned onto the appropriate line of the display 40. Thereafter, this process is repeated for each line of data forming the frame. After the last line of display data has been transmitted to the display 40, the timing generator 60' transmits a further horizontal synchronisation signal 110 to the display 40 over the timing and synchronisation bus 25 to indicate the end of the last line and that the frame of display data is now complete.

Hence, the display controller 10' provides each frame of display data to the display 40 in a conventional manner, using appropriate timing and control signals for that display. Accordingly, it will be appreciated that the supply of display data to the display 40 remains unchanged. Typically, the time taken between the first issue of the vertical synchronisation signal 100 indicating the beginning of the frame and the issue of the last horizontal synchronisation signal 110 indicative of the end of the frame will take between 12.5 and 20 milliseconds (i.e. a refresh rate of 50 to 80Hz).

After the last horizontal synchronisation signal 110 of the frame is generated, the timing generator 60' suspends the generation of any further timing, synchronisation or control signals for a predetermined period. The timing generator 60' determines the period for which the generation of these signals is suspended by examining the contents of the prevention register 80'. The contents of the prevention register 80' are typically programmed by the core 30. The value stored in the prevention register 80' is typically selected based on the type of display being used. In order to minimise any undesirable visual effects, such as screen flicker, the value is selected to be less than or equal to the visual persistence time of the pixels forming the display, which can be determined from the recommended minimum refresh rate, Rmin, specified for the display.

For high persistence displays such as, for example, thin film transistor liquid crystal displays, the pixel persistence or visual persistence time is typically in the order of 100 milliseconds. Accordingly, the time between updates of frames of display data can be as long as this persistence time. It will be appreciated that this extended persistence time is due to the provision of a storage element (typically a transistor) for each pixel. Hence, the value stored in the prevention register 80' may be indicative of up to the persistence time less the time taken to scan a frame of data onto the display. Accordingly, in the example thin film transistor liquid crystal display, the prevention register 80' can store a value representing up to around 80 to 84 milliseconds (100 milliseconds persistence time less 16 to 20 milliseconds scan time). Hence, instead of supplying and scanning data every 16 to 20 milliseconds, the data is supplied and scanned every 100 milliseconds. It will be appreciated that by updating the display 40 in this manner significantly reduces the power consumption of the display system 5'. Also, because the display is rescanned within the persistence time, any undesirable visual effects of the inter-frame delay are minimised.

Whilst in this preferred embodiment the generation of the timing, control and synchronisation signals is prevented during an inter-frame period, it will be appreciated that the generation of these signals could be prevented at any other time during the frame such as, for example, during the supply of lines of display data (although this may have an undesirable visual effect) or in particular during the supply of display data which corresponds to lines associated with the blanking interval of the frame.

As indicated in figure 5, the generation of timing, synchronisation and control signals and the transmission of display data recommences after the period 'p' indicated by the prevention register 80'. Whilst a prevention register 80' is shown, it will be appreciated that alternatively the core 30 could instead provide a signal to the timing generator 60' over the data path 35' indicative of the period for which the generation of the timing, synchronisation and control signals is suspended. However, providing such a register reduces the amount of data that needs to be transmitted by the core 30 to the display controller 10'. Also, it will be appreciated that the value stored in the prevention register 80' may be dynamically varied by the core 30 dependent on a number of factors. Such factors include the characteristics of the display data itself (such as whether the frame represents static or moving images), characteristics of the display 40 or, in situations where the display controller 10' drives more than one type of display, then the value can be altered depending on which display is being controlled.

Figure 6 illustrates an early refresh operation which utilises the refresh register 90' according to a preferred embodiment. This optional feature is utilised in order to prevent any unacceptable update latency which may result from the introduction of the inter-frame delay. This update latency may occur when the data stored in the frame buffer 20 is changed faster than the rate at which the display 40 is supplied with that data. Such latency can cause a seemingly poor response from the display following, for example, a user action which causes the display data in the frame buffer 20 to be changed, but that change is not rapidly shown on the display 40.

However, in an environment such as the control of an LCD display utilised in a mobile phone or a personal digital assistant, there is likely to be relatively long periods of time during which the contents of the frame buffer 20 remain unchanged within the persistence time.

As illustrated in figure 6 when the contents of the frame buffer 20 are updated by the core 30, a signal 170 is provided to the display controller 10' over the data path 35'. On receipt of the signal 170 indicating that the contents of the frame buffer 20 have changed, the refresh register 90' is set. Also, the timing generator 60', during the delay period, is responsive to the refresh register 90' it being set. In the event that the refresh register 90' has been set the timing generator 60' then resumes the generation of timing, synchronisation and control signals and lines of display data are retrieved and provided to the display 40 at the appropriate time. Once the display 40 has been updated, the refresh register 90' is then once again cleared.

Accordingly, it can be seen that when the contents of the frame buffer 20 are altered during the interval in which the generation of timing, synchronisation and control signals has been prevented, the generation of these signals can be resumed so that the display 40 can be updated in order to reduce any latency effects on the display 40.

Whilst this preferred embodiment operates in conjunction with a display 40, such as a TFT LCD display, which is driven using conventional timing and synchronisation signals developed by the television industry, it will be appreciated that the display controller 10' could equally be utilised with other display types which use different timing and synchronisation signals. In those situations, the display controller could simply be arranged to generate those signals by programming the synchronisation registers 75' with the appropriate values such that the timing generator 60' may generate the required timing and synchronisation signals. Furthermore, whilst this preferred embodiment operates in conjunction with a TFT LCD display, it will be appreciated that any displays employing thin film transistor (TFT) active matrix control are particularly suited to this technique. Examples of such TFT displays include organic light emitting polymer displays (TFT OLEP) as well as liquid crystal displays (TFT LCD)

In so far as the embodiments of the invention described above are implemented, at least in part, using software-controlled data processing apparatus, it will be appreciated that a computer program providing such software control and a storage medium by which such computer program is stored are envisaged as aspects of the present invention.

Although particular embodiments have been described herein, it will be appreciated that the invention is not limited thereto and that many modifications and additions thereto may be within the scope of the invention.

## Claims

1. A display controller (10') for controlling a display (40) having a plurality of pixels forming a frame, the display controller comprising:
display data supply means (50') operable to supply sequential frames of display data to the display; and
a supply controller (60', 70') operable to control the supply of each frame of display data from the display data supply means for displaying on the display, the supply controller being operable to prevent intermittently the supply of a frame of display data to the display for a predetermined period.

2. The display controller as claimed in claim 1, wherein each pixel has a pixel persistence of time 't',
the display data supply means is operable to supply display data for each pixel in the frame and
the supply controller is operable to prevent intermittently the supply of a subsequent frame of display data to the display for the predetermined period which is up to time 't'.

3. The display controller as claimed in claim 2, wherein the supply controller is operable to prevent intermittently the supply of the subsequent frame of display data to the display for the predetermined period after the supply of a current frame of data to the display.

4. The display controller as claimed in claim 2 or 3, wherein the time taken by the display to display the supplied frame of display data is a time 'q', where time 'q' is less than time 't'.

5. The display controller as claimed in claim 4, wherein the predetermined period is up to time 't' minus time 'q'.

6. The display controller as claimed in any one of claims 2 to 5, wherein the supply controller is operable to resume the supply of the subsequent frame of display data to the display during the predetermined period in response to the receipt of an indication (170) that the subsequent frame of display data differs from the current frame of display data.

7. The display controller as claimed in any one of claims 2 to 6, wherein the supply controller is operable to generate timing signals to control the supply of the sequential frames of display data to the display, the supply controller being operable to prevent the generation of the timing signals for the predetermined period to prevent the supply of the subsequent frame of display data to the display.

8. The display controller as claimed in claim 7, wherein the timing signals comprise vertical synchronisation and horizontal synchronisation signals (100,110), the supply controller being operable to prevent the generation of the vertical synchronisation and horizontal synchronisation signals for the predetermined period to prevent the supply of the subsequent frame of display data to the display.

9. The display controller as claimed in any preceding claim, wherein the supply controller comprises a programmable prevention register (80') operable to store an indication of the predetermined period.

10. The display controller as claimed in any one of claims 1 to 8, wherein the supply controller is responsive to a signal indicative of the predetermined period.

11. The display controller as claimed in any preceding claim, wherein the display comprises thin film transistor active matrix control.

12. The display controller as claimed in any preceding claim, wherein the display is a thin film transistor liquid crystal display.

13. A method of controlling the supply of sequential frames of display data to a display, the display having a plurality of pixels forming a frame, the method comprising the steps of:
a) controlling the supply of each frame of display data for displaying on the display; and
b) preventing intermittently the supply of a frame of display data to the display for a predetermined period.

14. The method as claimed in claim 13, wherein each pixel has a pixel persistence of time 't', and the step a) comprises the step of:
controlling the supply of display data for each pixel in the frame; and the step b) comprises the step of:
preventing intermittently the supply of a subsequent frame of display data to the display for the predetermined period which is up to time 't'.

15. The method as claimed in claim 14, wherein step b) comprises:
preventing intermittently the supply of the subsequent frame of display data to the display for the predetermined period after the supply of a current frame of data to the display.

16. The method as claimed in claim 14 or 15, wherein the time taken by the display to display the supplied frame of display data is a time 'q', where time 'q' is less than time 't'.

17. The method as claimed in claim 16, wherein the predetermined period is up to time 't' minus time 'q'.

18. The method as claimed in any one of claims 14 to 17, further comprising the step of:
resuming the supply of the subsequent frame of display data to the display during the predetermined period in response to the receipt of an indication (170) that the subsequent frame of display data differs from the current frame of display data.

19. The method as claimed in any one of claims 14 to 18, wherein the step a) comprises the step of:
generating timing signals to control the supply of the sequential frames of display data to the display; and the step b) comprises:
preventing the generation of the timing signals for the predetermined period to prevent the supply of the subsequent frame of display data to the display.

20. The method as claimed in claim 19, wherein the timing signals comprise vertical synchronisation and horizontal synchronisation signals (100, 110), and the step b) comprises:
preventing the generation of the vertical synchronisation and horizontal synchronisation signals for the predetermined period to prevent the supply of the subsequent frame of display data to the display.

21. The method as claimed in any one of claims 13 to 20, comprising the step of:
storing an indication of the predetermined period.

22. The method as claimed in any one of claims 13 to 20, comprising the step of:
receiving a signal indicative of the predetermined period.

23. A computer program product operable to perform the method as claimed in any one of claims 13 to 22 when said product is run on a computer.
